# EUROPÄISCHE PATENTANMELDUNG

(11) **EP 1 403 657 A1**
(43) Veröffentlichungstag der Anmeldung: **31.03.2004**
(21) Anmeldenummer: 03020721.1
(22) Anmeldetag: 11.09.2003
(51) Int. Cl.: G01S 7/48, G01S 17/93

(54) **Optoelektronische Erfassungseinrichtung**

(30) Priorität: 25.09.2002 DE 10244639
(71) Anmelder: IBEO Automobile Sensor GmbH, 22179 Hamburg (DE)
(72) Erfinder: Lages, Ulrich, Dr., 21031 Hamburg (DE)
(74) Vertreter: Manitz, Finsterwald & Partner GbR

(57) **Zusammenfassung**

Die Erfindung betrifft eine optoelektronische Erfassungseinrichtung, insbesondere einen Laserscanner, mit wenigstens einem Sender zur Aussendung bevorzugt gepulster elektromagnetischer Strahlung, zumindest einem dem Sender zugeordneten Empfänger und wenigstens einer zu einer Abtastbewegung relativ zum Sender und zum Empfänger antreibbaren Ablenkeinrichtung, mit der von dem Sender ausgesandte Strahlung in einen Überwachungsbereich und aus dem Überwachungsbereich reflektierte Strahlung auf den Empfänger lenkbar ist, wobei die Ablenkeinrichtung wenigstens zwei zueinander geneigt verlaufende Reflexionsflächen für die von dem Sender ausgesandte Strahlung aufweist.

## Beschreibung

Die Erfindung betrifft eine optoelektronische Erfassungseinrichtung, insbesondere einen Laserscanner, mit wenigstens einem Sender zur Aussendung bevorzugt gepulster elektromagnetischer Strahlung, zumindest einem dem Sender zugeordneten Empfänger und wenigstens einer zu einer Abtastbewegung relativ zum Sender und zum Empfänger antreibbaren Ablenkeinrichtung, mit der von dem Sender ausgesandte Strahlung in einen Überwachungsbereich und aus dem Überwachungsbereich reflektierte Strahlung auf den Empfänger lenkbar ist.

Derartige Erfassungseinrichtungen sind grundsätzlich bekannt und werden beispielsweise an Fahrzeugen angebracht, um während der Fahrt die Umgebung des Fahrzeugs zu erfassen.

Aufgabe der Erfindung ist es, eine optoelektronische Erfassungseinrichtung der eingangs genannten Art zu schaffen, die unter möglichst weitgehender Beibehaltung bekannter Konzepte neue, bisher nicht realisierbare Einsatzmöglichkeiten bietet.

Die Lösung dieser Aufgabe erfolgt erfindungsgemäß durch die Merkmale des Anspruchs 1 und insbesondere dadurch, dass die Ablenkeinrichtung wenigstens zwei zueinander geneigt verlaufende Reflexionsflächen für die von dem Sender ausgesandte Strahlung aufweist.

Erfindungsgemäß wird zur Ablenkung der Abtaststrahlung nicht eine einzige durchgehende Reflexionsfläche verwendet, sondern die Reflexionsfläche der Ablenkeinrichtung ist erfindungsgemäß in wenigstens zwei Einzelflächen unterteilt, die sich nicht parallel zueinander erstrecken, sondern zueinander geneigt verlaufen. Durch eine während des Abtastbetriebs erfolgende Relativbewegung zwischen einer derartigen mehrflächigen Ablenkeinrichtung einerseits und dem Sender und dem Empfänger andererseits können neue und für bestimmte Anwendungen besonders vorteilhafte Abtastszenarien realisiert werden, die mit einer lediglich eine einzige Reflexionsfläche umfassenden Ablenkeinrichtungen nicht möglich sind.

Bevorzugte Ausführungsformen der Erfindung sind in den Unteransprüchen, der Beschreibung sowie der Zeichnung angegeben.

So ist gemäß einem bevorzugten Ausführungsbeispiel vorgesehen, dass die Ablenkeinrichtung relativ zu dem Sender und dem Empfänger drehbar und insbesondere zur Ausführung einer kontinuierlichen Rotationsbewegung mit einer konstanten Drehzahl ausgebildet ist.

Während mit einem derartigen Scanner bei Verwendung einer einzigen durchgehenden Reflexionsfläche grundsätzlich eine 360° umfassende Rundum-Abtastung des Überwachungsbereiches möglich ist, ist dies bei der im Folgenden ebenfalls einfach als Scanner bezeichneten erfindungsgemäßen Erfassungseinrichtung in dieser Ausführungsform aufgrund der in mehrere nicht-parallele Einzelflächen unterteilten Reflexionsfläche der Ablenkeinrichtung nicht der Fall.

Bei dem erfindungsgemäßen Scanner dieser Ausführungsform ist der Sichtbereich kleiner als 360°. Dafür kann jedoch die Abtastung des verbleibenden Sichtbereiches mit einer größeren Abtastfrequenz erfolgen, da - bei entsprechender Ausgestaltung und Anordnung der Reflexionsflächen - für jede vollständige Drehung der Ablenkeinrichtung die vom Sender ausgesandte Strahlung mehrfach - nämlich von jeder Reflexionsfläche einmal - in den gleichen verbliebenen Sichtbereich abgelenkt wird.

Der erfindungsgemäße Scanner kann folglich derart ausgebildet werden, dass eine Reduzierung des Sichtbereiches mit einer Vergrößerung der Abtastfrequenz innerhalb des reduzierten Sichtbereiches einhergeht. Folglich ist die erfindungsgemäße Erfassungseinrichtung besonders gut für solche Anwendungen geeignet, in denen es nicht darauf ankommt, dass eine 360°-Rundumsicht zur Verfügung steht, sondern vielmehr eine hohe Abtastfrequenz angestrebt wird.

Bei der erfindungsgemäß bevorzugten Verwendung des Scanners in Verbindung mit einem Fahrzeug zur Abtastung der Fahrzeugumgebung sind besonders bevorzugte Anwendungen des erfindungsgemäßen Konzepts Einpark-Situationen und so genannte Pre-Crash-Situationen.

In einer weiteren bevorzugten Ausführungsform der Erfindung ist der Sender bezüglich einer insbesondere durch den Empfänger hindurch verlaufenden Drehachse der Ablenkeinrichtung seitlich versetzt angeordnet.

Ferner ist vorzugsweise vorgesehen, dass der Ausbreitungsweg der von dem Sender ausgesandten Strahlung zumindest vor dem Auftreffen auf den Reflexionsflächen parallel zu einer Drehachse der Ablenkeinrichtung verläuft.

Besonders bevorzugt ist es, wenn bei jeder sich während der Abtastbewegung der Ablenkeinrichtung ergebenden Orientierung der Ablenkeinrichtung relativ zum Sender eine der Reflexionsflächen im Ausbreitungsweg der von dem Sender ausgesandten Strahlung liegt. Hierdurch ist eine kontinuierliche Abtastung des Überwachungsbereiches sichergestellt.

In einer besonders bevorzugten praktischen Ausgestaltung der Erfindung weist die Ablenkeinrichtung genau zwei Reflexionsflächen auf, wobei insbesondere die durch die beiden Reflexionsflächen festgelegten Ebenen sich in einer Linie schneiden, durch die eine Drehachse der Ablenkeinrichtung hindurch verläuft.

Mit einer derartigen Anordnung kann ein Winkelbereich von bis zu 180° abgetastet werden, wobei bei jeder Umdrehung der Ablenkeinrichtung dieser 180°-Sichtbereich zweimal abgetastet wird, nämlich zunächst einmal über die eine Reflexionsfläche und anschließend ein weiteres Mal über die andere Reflexionsfläche, die in den Ausbreitungsweg der vom Sender ausgesandten Strahlung gelangt, wenn die erste Reflexionsfläche den Ausbreitungsweg verlässt.

In diesem bevorzugten Ausführungsbeispiel geht die Halbierung des vollen 360°-Sichtbereiches folglich einher mit einer Verdoppelung der Abtastfrequenz in dem verbleibenden 180°-Sichtbereich des Scanners.

Die beiden Reflexionsflächen können bezüglich einer Drehachse der Ablenkeinrichtung symmetrisch angeordnet sein und insbesondere den gleichen Neigungswinkel relativ zur Drehachse aufweisen.

Alternativ kann erfindungsgemäß auch eine asymmetrische Anordnung mit unterschiedlichen Neigungswinkeln der Reflexionsflächen vorgesehen sein.

Die Erfindung wird im Folgenden beispielhaft unter Bezugnahme auf die Zeichnung beschrieben. Es zeigen:
- Fig. 1: schematisch das erfindungsgemäße Konzept anhand eines bevorzugten Ausführungsbeispiels in einer perspektivischen Darstellung,
- Fig. 2: das erfindungsgemäße Konzept in einer schematischen Seitenansicht, und
- Fig. 3: in einer Seitenansicht eine Ausführungsform eines erfindungsgemäßen Laserscanners.

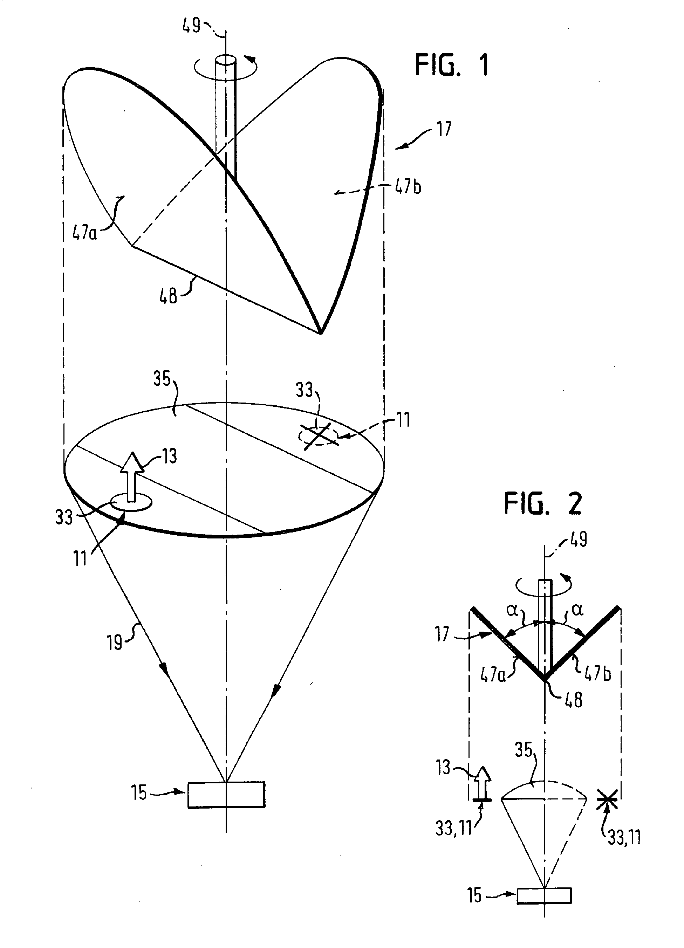

In den schematisch ein Beispiel für das Konzept der Erfindung zeigenden Fig. 1 und 2 ist eine Ablenkeinrichtung 17 vorgesehen, die um eine Achse 49 drehbar angeordnet ist. Die Ablenkeinrichtung 17 umfasst zwei Spiegelflächen 47a, 47b, die ausgehend von einer gemeinsamen Linie 48 V-förmig auseinander laufen, wobei die Drehachse 49 die Linie 48 schneidet und senkrecht zu dieser Linie 48 verläuft.

Die Anordnung dieses "Knickspiegels" 47a, 47b ist bezüglich der Drehachse 49 symmetrisch, d.h. die beiden Spiegelflächen 47a, 47b schließen mit der Drehachse 49 den gleichen Neigungswinkel α ein, der beispielsweise 45° beträgt. Alternativ können die Neigungswinkel der beiden Reflexionsflächen 47a, 47b auch voneinander verschieden sein.

Der erfindungsgemäße Knickspiegel 17 schwebt folglich gewissermaßen wie ein Schmetterling oberhalb einer im Folgenden näher beschriebenen Sende- und Empfangsanordnung, wobei die beiden Spiegelhälften 47a, 47b die Schmetterlingsflügel bilden.

Die bezüglich des Drehspiegels 17 stationäre Sende- und Empfangsanordnung umfasst einen Strahlungsempfänger 15 sowie zwei jeweils eine nicht dargestellte Laserdiode als Strahlungsquelle aufweisende Sendemodule 11, die bezüglich der Drehachse 49 und des Empfängers 15 exzentrisch sowie gleich weit von der Drehachse 49 entfernt derart angeordnet sind, dass eine gedachte, die beiden Lasermodule 11 miteinander verbindende Linie die Drehachse 49 schneidet.

Die Sende- und Empfangsanordnung weist eine Sende- und Empfangsoptik auf, die eine großflächige, dem Empfänger 15 zugeordnete Empfangslinse 35 sowie zwei kleinere, jeweils einem der Lasermodule 11 zugeordnete Sendelinsen 33 umfasst. Die Linsen 33, 35 liegen in einer senkrecht zur Drehachse 49 verlaufenden Ebene.

Während des Abtastbetriebs rotiert der Knickspiegel 47a, 47b mit einer konstanten Drehzahl relativ zu der stationären Anordnung aus Sendern 11, Empfänger 15 sowie Linsen 33, 35. Obwohl zwei Sendemodule 11 vorgesehen sind, wird der erfindungsgemäße Scanner in diesem Ausführungsbeispiel derart betrieben, dass lediglich ein Lasermodul 11 aktiv und das andere Lasermodul 11 nicht angesteuert wird, was in Fig. 1 und 2 mit einem durchstreichenden "X" symbolisiert ist.

Ein mit dieser Sende- und Empfangsanordnung grundsätzlich möglicher Scanbetrieb mit zwei aktiven Sendemodulen 11 erfolgt nicht in Verbindung mit dem erfindungsgemäßen Knickspiegel 47a, 47b, sondern in Verbindung mit einem nicht dargestellten durchgehenden Spiegel, der den Empfangskanal 15, 35 und gleichzeitig beide Sendekanäle 11, 33 abdeckt.

Bei dem erfindungsgemäßen Scanner deckt jede der beiden Reflexionsfläche 47a, 47b des Knickspiegels 17 nur jeweils den Empfangskanal 15, 35 und einen einzigen Sendekanal 11, 33 ab, wobei allerdings bei jeder Umdrehung des Knickspiegels 17 der aktive Sendekanal 11, 33 nacheinander mit den beiden Reflexionsflächen 47a, 47b zusammenwirkt, so dass der erfindungsgemäße Scanner in dem dargestellten Ausführungsbeispiel einen maximalen Sichtbereich von 180° aufweist, der pro Umdrehung der Ablenkeinrichtung 17 zweimal hintereinander abgetastet wird, und zwar mit jeder der beiden Reflexionsflächen 47a, 47b einmal.

In Abhängigkeit davon, ob eine symmetrische oder asymmetrische Anordnung der beiden Reflexionsflächen 47a, 47b vorgesehen ist, d.h. die Neigungswinkel der Reflexionsflächen 47a, 47b bezüglich der Drehachse 49 gleich oder voneinander verschieden sind, erfolgt die Abtastung des 180°-Sichtbereiches pro Umdrehung des Knickspiegels 47a, 47b zweimal in der gleichen Abtastebene (symmetrisch) oder nacheinander in zwei unterschiedlichen Abtastebenen (asymmetrisch).

Durch die unterbrochene Linie auf der in Fig. 2 rechten, das nicht-aktive Sendemodul 11 umfassenden Seite der Drehachse 49 ist angedeutet, dass sich durch die Verwendung lediglich eines einzigen Sendemoduls 11 die Aussendung und der Empfang der Strahlung 13 ausschließlich in dem den aktiven Sendekanal 11, 33 umfassenden, in Fig. 2 linken Halbraum abspielt, die andere Hälfte des Empfangskanals 15, 35 also ungenutzt bleibt.

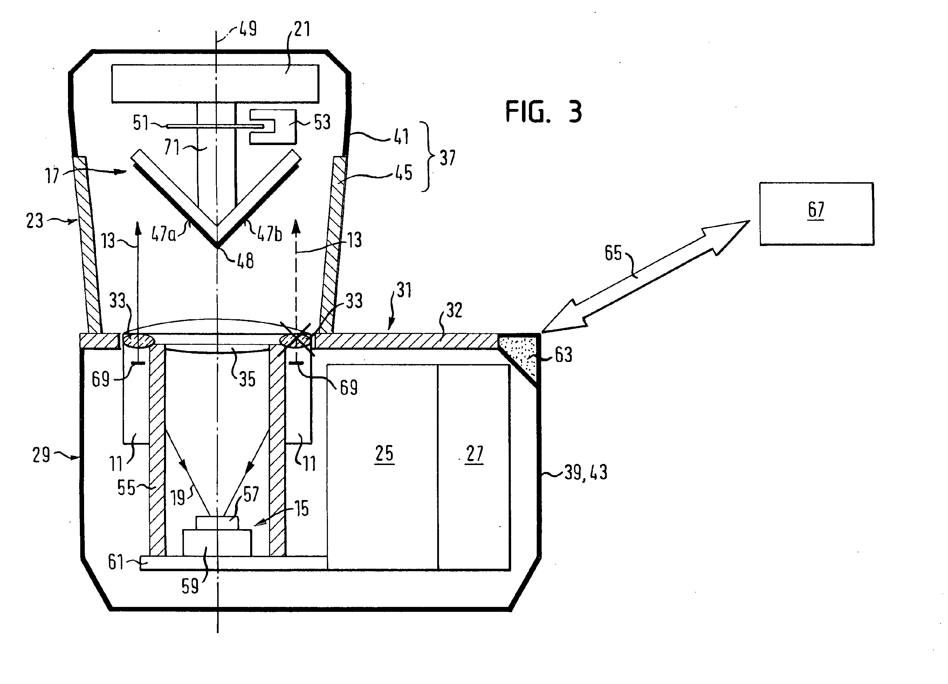

Fig. 3 zeigt anhand eines bevorzugten Ausführungsbeispiels für einen Laserscanner die Anordnung des erfindungsgemäßen Knickspiegels 47a, 47b.

Der Scanner ist in Modulbauweise ausgeführt und umfasst ein oberes Ablenkmodul 23 mit der den Knickspiegel 47a, 47b umfassenden Ablenkeinrichtung 17, mit einer als flacher Elektromotor ausgebildeten Antriebseinheit 21 zum Drehen des Spiegels 47a, 47b um die Drehachse 49, sowie mit einer Winkelmesseinrichtung zur Bestimmung der Winkelstellung des Spiegels 47a, 47b, die einen feststehenden Reader 53 und eine Encoderscheibe 51 umfasst, die an einer sich während des Scanbetriebs drehenden Antriebswelle 71 der Ablenkeinrichtung 17 befestigt ist.

Die Komponenten des Ablenkmoduls 23 sind durch ein Gehäuse 37 vor äußeren Einflüssen geschützt. Das Gehäuse 37 umfasst eine Abdeckkappe 41 sowie einen selbsttragenden, auch als Dom bezeichneten weiteren Gehäuseabschnitt 45, an welchem die Abdeckkappe 41 abnehmbar angebracht ist und über den das Ablenkmodul 23 an eine Tragstruktur 31 eines Sensormoduls 29 des Scanners gekoppelt ist, wobei in diesem Ausführungsbeispiel die Koppelung durch Verschrauben des Gehäuseabschnitts 45 mit der Tragstruktur 31 erfolgt.

Die den Spiegel 47a, 47b und die Winkelmesseinrichtung 51, 53 tragende Antriebseinheit 21 ist an dem Gehäuseabschnitt 45 abgestützt und somit über den Gehäuseabschnitt 45 von der zentralen Tragstruktur 31 getragen.

Das Sensormodul 29 umfasst in diesem Ausführungsbeispiel die beiden jeweils mit einer Laserdiode 69 als Strahlungsquelle versehenen Lasermodule 11 sowie den Empfänger 15 mit einem Empfangsarray 59 aus mehreren Fotodioden, das auf einem Empfängerboard 61 angebracht und dem ein Filter 57 vorgelagert ist. Über das Empfängerboard 61 mit dem Empfänger 15 verbunden sind eine Auswerteeinheit 25 und eine Versorgungseinheit 27. Durch mit einem Anschlussbereich 63 des Sensormoduls 29 verbindbare Kommunikations- und Versorgungsleitungen 65 wird der erfindungsgemäße Scanner an einen insbesondere in Form eines Industrie-PCs vorgesehenen Auswerterechner 67 sowie an eine nicht dargestellte Stromquelle angeschlossen. Die Versorgung des Ablenkmoduls 23 mit elektrischer Energie erfolgt somit über das Sensormodul 29, und zwar über nicht dargestellte Stromzuführungen, mit denen zwischen dem Ablenkmodul 23 und dem Sensormodul 29 bei deren Koppelung eine elektrische Verbindung hergestellt wird.

Ein Gehäuse 39 des Sensormoduls 29 wird von einer Abdeckkappe 43 gebildet, die abnehmbar mit der bereits erwähnten Tragstruktur 31 verbunden ist, beispielsweise durch Verschrauben.

Die bevorzugt als einstückiges Aluminium-Druckgussteil hergestellte Tragstruktur 31 umfasst einen plattenförmigen, auch als Halteplatte bezeichneten Deckelabschnitt 32 sowie einen senkrecht zur Halteplatte 32 verlaufenden Lichtschacht 55 als weiteren Funktionsabschnitt der Tragstruktur 31. Alternativ kann es sich bei der Halteplatte 32 und dem Schacht 55 um separate Komponenten handeln. In diesem Fall würde die Halteplatte 32, an welcher der Schacht 55 dann durch geeignete Verbindungsmittel befestigt wäre, alleine das zentrale tragende Strukturelement des erfindungsgemäßen Scanners bilden.

Die Lasermodule 11 sind am Schacht 55 befestigt und somit über diesen von der Halteplatte 32 der Tragstruktur 31 gehalten. Ebenfalls mittels des Lichtschachts 55 von der Halteplatte 32 gehalten ist das das Empfangsarray 59 mit dem Filter 57 tragende Empfängerboard 61. Die Auswerteeinheit 25 und die Versorgungseinheit 27 sind ebenfalls an der Halteplatte 32 angebracht.

Damit sind praktisch alle Komponenten des Sensormoduls 29 und des Ablenkmoduls 23 und damit alle Scanner-Komponenten entweder direkt oder indirekt mit der Tragstruktur 31 verbunden.

Die Justage des Sensormoduls 29 wird dadurch ermöglicht, dass durch nicht dargestellte Mittel die in Fig. 1 lediglich angedeuteten Laserdioden 69 der Lasermodule 11 sowie das Empfangsarray 59 relativ zum Schacht 55 und damit zu dem die Sendelinsen 33 und die Empfangslinse 35 umfassenden Deckelabschnitt 32 verstellt werden können.

Der Grundaufbau des erfindungsgemäßen Scanners an sich, die Integration der Linsen 33, 34 in die zentrale Tragstruktur 31 an sich, die Verwendung einer Mehrzahl von Lasermodulen 11 an sich sowie die Justage der Scannerkomponenten an sich sind jeweils Gegenstand einer weiteren, am gleichen Tag wie die vorliegende Patentanmeldung hinterlegten deutschen Patentanmeldung, so dass auf Details hierzu nicht näher eingegangen wird.

Hinsichtlich Details betreffend die Funktionsweise des erfindungsgemäßen Laserscanners und insbesondere bezüglich des Konzepts einer strich- oder linienförmigen Strahlungsquelle 69 in Verbindung mit einer relativ zu dieser Strahlungsquelle 69 rotierenden Ablenkeinrichtung 17 an einem Laserscanner an sich wird auch auf die noch nicht veröffentlichte, am 03. September 2001 hinterlegte deutsche Patentanmeldung 101 43 060.4 verwiesen.

Das Sensormodul 29 des erfindungsgemäßen Scanners kann abweichend von der Darstellung in Fig. 3 mit einem anderen Ablenkmodul 23 eingesetzt werden, dessen Ablenkeinrichtung 17 eine einzige durchgehende Reflexionsfläche aufweist, die in jeder Drehstellung den Empfangspfad 15, 35 und beide Sendepfade 11, 33 abdeckt. In einer derartigen Konfiguration sind während des Scanbetriebs beide Lasermodule 11 aktiv.

Bei dem erfindungsgemäßen Scanner in der Ausführungsform gemäß Fig. 3 wird entweder ein Sensormodul 29 mit lediglich einem einzigen Lasermodul 11 verwendet, d.h. das zweite Lasermodul 11 wird weggelassen, oder das Sensormodul 29 wird derart betrieben, dass eines der beiden Lasermodule 11 nicht angesteuert wird und somit während des Scanbetriebs inaktiv ist. Entsprechend Fig. 1 und 2 ist dies auch in Fig. 3 mit einem durchstreichenden "X" angedeutet.

Während des Betriebs des Scanners wird die von dem aktiven Lasermodul 11 emittierte, vorzugsweise im IR-Bereich liegende Strahlung 13 nacheinander von den beiden Reflexionsflächen 47a, 47b durch den für die verwendete Strahlung durchlässigen Gehäuseabschnitt 45 hindurch in den Überwachungsbereich umgelenkt, wobei mit jeder der beiden Reflexionsflächen 47a, 47b der gleiche 180°-Winkelbereich abgetastet wird. Die aus dem Überwachungsbereich reflektierte Strahlung 19 wird jeweils über die gleiche Reflexionsfläche 47a, 47b sowie über die Empfangslinse 35 auf das Empfangsarray 59 gelenkt und mittels der Auswerteeinheit 25 sowie des Rechners 27 ausgewertet.

Die Strahlform der Abtaststrahlung 13, 19 ist grundsätzlich beliebig. Vorzugsweise sind die Lasermodule 11 jeweils mit einer Halbleiterlaserdiode 69 versehen, mit der die Sendestrahlung 13 strich- oder linienförmig ausgesandt wird, d.h. die in den Überwachungsbereich ausgesandte Strahlung weist eine lang gestreckte Strahlungsfront auf. Entsprechend strichoder linienförmig ist das Diodenarray 59 des Empfängers 15 ausgebildet.

Der Inhalt aller vorstehend erwähnten weiteren Patentanmeldungen wird hiermit durch Bezugnahme mit in die vorliegende Patentanmeldung aufgenommen.

### Bezugszeichenliste

- 11: Sender, Lasermodul
- 13: ausgesandte Strahlung
- 15: Empfänger
- 17: Ablenkeinrichtung
- 19: reflektierte, empfangene Strahlung
- 21: Antriebseinheit
- 23: Ablenkmodul
- 25: Auswerteeinheit
- 27: Versorgungseinheit
- 29: Sensormodul
- 31: Tragstruktur
- 32: Deckelabschnitt der Tragstruktur, Halteplatte
- 33: Sendelinse
- 35: Empfangslinse
- 37: Gehäuse des Ablenkmoduls
- 39: Gehäuse des Sensormoduls
- 41: Abdeckkappe des Ablenkmoduls
- 43: Abdeckkappe des Sensormoduls
- 45: Gehäuseabschnitt des Ablenkmoduls
- 47a: Reflexionsfläche, Spiegel
- 47b: Reflexionsfläche, Spiegel
- 48: gemeinsame Linie der beiden Reflexionsflächen
- 49: Drehachse
- 51: Encoder
- 53: Reader
- 55: Schacht
- 57: Filter
- 59: Empfangsarray
- 61: Empfängerboard
- 63: Anschlussbereich
- 65: Leitungen
- 67: Rechner
- 69: Laserdiode
- 71: Antriebswelle

- α: Neigungswinkel der Reflexionsflächen

## Patentansprüche

1. Optoelektronische Erfassungseinrichtung, insbesondere Laserscanner, mit wenigstens einem Sender (11) zur Aussendung bevorzugt gepulster elektromagnetischer Strahlung (13), zumindest einem dem Sender (11) zugeordneten Empfänger (15) und wenigstens einer zu einer Abtastbewegung relativ zum Sender (11) und zum Empfänger (15) antreibbaren Ablenkeinrichtung (17), mit der von dem Sender (11) ausgesandte Strahlung (13) in einen Überwachungsbereich und aus dem Überwachungsbereich reflektierte Strahlung (19) auf den Empfänger (15) lenkbar ist,
**dadurch gekennzeichnet,**
**dass** die Ablenkeinrichtung (17) wenigstens zwei zueinander geneigt verlaufende Reflexionsflächen (47a, 47b) für die von dem Sender (11) ausgesandte Strahlung (13) aufweist.

2. Erfassungseinrichtung nach Anspruch 1,
**dadurch gekennzeichnet,**
**dass** der Sender (11) bezüglich einer Drehachse (49) der Ablenkeinrichtung (17) seitlich versetzt angeordnet ist.

3. Erfassungseinrichtung nach Anspruch 1 oder 2,
**dadurch gekennzeichnet,**
**dass** der Ausbreitungsweg der von dem Sender (11) ausgesandten Strahlung (13) zumindest vor dem Auftreffen auf den Reflexionsflächen (47a, 47b) parallel zu einer Drehachse (49) der Ablenkeinrichtung (17) verläuft.

4. Erfassungseinrichtung nach einem der vorhergehenden Ansprüche,
**dadurch gekennzeichnet,**
**dass** bei jeder sich während der Abtastbewegung der Ablenkeinrichtung (17) ergebenden Orientierung der Ablenkeinrichtung (17) relativ zum Sender (11) eine der Reflexionsflächen (47a, 47b) im Ausbreitungsweg der von dem Sender (11) ausgesandten Strahlung (13) liegt.

5. Erfassungseinrichtung nach einem der vorhergehenden Ansprüche,
**dadurch gekennzeichnet,**
**dass** bei jeder sich während der Abtastbewegung der Ablenkeinrichtung (17) ergebenden Orientierung der Ablenkeinrichtung (17) relativ zum Sender (11) und zum Empfänger (15) der Sendepfad und der Empfangspfad von der gleichen Reflexionsfläche (47a, 47b) abgedeckt sind.

6. Erfassungseinrichtung nach einem der vorhergehenden Ansprüche,
**dadurch gekennzeichnet,**
**dass** durch die Reflexionsflächen (47a, 47b) festgelegte Ebenen sich in einer Linie (48) schneiden, durch die eine Drehachse (49) der Ablenkeinrichtung (17) hindurch verläuft.

7. Erfassungseinrichtung nach einem der vorhergehenden Ansprüche,
**dadurch gekennzeichnet,**
**dass** die Ablenkeinrichtung (17) genau zwei Reflexionsflächen (47a, 47b) aufweist.

8. Erfassungseinrichtung nach einem der vorhergehenden Ansprüche,
**dadurch gekennzeichnet,**
**dass** die Reflexionsflächen (47a, 47b) bezüglich einer Drehachse (49) der Ablenkeinrichtung (17) symmetrisch angeordnet sind und insbesondere den gleichen Neigungswinkel (α) relativ zur Drehachse (49) aufweisen, wobei vorzugsweise der Neigungswinkel (α) = 45° beträgt.

9. Erfassungseinrichtung nach einem der Ansprüche 1 bis 7,
**dadurch gekennzeichnet,**
**dass** die Reflexionsflächen (47a, 47b) bezüglich einer Drehachse (49) der Ablenkeinrichtung (17) asymmetrisch angeordnet sind und insbesondere unterschiedliche Neigungswinkel relativ zur Drehachse (49) aufweisen.

10. Erfassungseinrichtung nach einem der vorhergehenden Ansprüche,
**dadurch gekennzeichnet,**
**dass** die Ablenkeinrichtung (17) relativ zu dem Sender (11) und dem Empfänger (15) drehbar und insbesondere zur Ausführung einer kontinuierlichen Rotationsbewegung mit einer konstanten Drehzahl ausgebildet ist.

11. Verwendung wenigstens einer optoelektronischen Erfassungseinrichtung nach einem der Ansprüche 1 bis 10 in Verbindung mit einem Fahrzeug zur Abtastung der Fahrzeugumgebung, insbesondere in Einpark- und/ oder Pre-Crash-Situationen.
